# EUROPEAN PATENT APPLICATION

(11) **EP 3 151 058 A1**
(43) Date of publication of application: **05.04.2017**
(21) Application number: 16001681.2
(22) Date of filing: 29.07.2016
(51) Int. Cl.: G02F 1/1333, G02F 1/1335, G06F 3/041

(54) **TOUCH DISPLAY DEVICE**

(30) Priority: 30.09.2015 CN 201510640914; 29.10.2015 CN 201510733418
(71) Applicant: Nanchang O-Film Tech. Co., Ltd., Nanchang, Jiangxi 330013 (CN); Shenzhen O-Film Tech Co., Ltd., Shenzhen City, Guangdong 518106 (CN); Suzhou O-Film Tech Co., Ltd., Suzhou, Jiangsu 215152 (CN)
(72) Inventor: MENG, Kai, Jiangxi, 330013 (CN); ZHENG, Gangqiang, Jiangxi, 330013 (CN); HUANG, Meifeng, Jiangxi, 330013 (CN); TANG, Bin, Jiangxi, 330013 (CN); DOU, Zhongshang, Jiangxi, 330013 (CN); NI, Yuyang, Jiangxi, 330013 (CN)
(74) Representative: Blum, Heike

(57) **Abstract**

The touch display device includes a cover plate, a touch sensor unit, a display unit and a pressure sensor unit. The touch sensor unit is configured to sense a touch signal applied to the cover plate, the display unit includes a liquid crystal function layer and a backlight module. The pressure sensor unit includes an upper conductive electrode layer and a lower conductive electrode layer, which cooperative forming a capacitance sensor to sense a pressure signal applied to the cover plate. The upper conductive electrode layer is positioned between the liquid crystal function layer and the backlight module. The lower conductive electrode layer is positioned beneath a side of a reflector of the backlight module away from the light guide plate.

## Description

### FIELD OF THE INVENTION

The invention relates to a field of touch display, and more particularly, relates to a touch display device provided with a pressure sensing function.

### BACKGROUND OF THE INVENTION

Due to advantages such as operability and flexibility, the touch screen has already become a main human-computer interaction means of personal mobile communication equipments and comprehensive information terminals (such as mobile phone, tablet PC, and notebook). Compared with touch screens of resistance or other types, capacitive touch screens are increasingly and extensively employed by intelligent terminal, due to its advantages such as low cost, simple structure, and durability. However, the well-known capacitive touch screen can merely sense touch positions and operations on the plane on which the screen is located, and is hard to sense the touch parameters brought up by a change of the pressure force applied to the surface of screen.

In order to sense the change of the pressure force on the screen surface, for one skilled in the art, a pressure sensor is integrated in the touch screen. However, the common practice can merely detect the touch pressure signals of a single point touch.

### SUMMARY OF THE INVENTION

Therefore, it is necessary to provide a touch display device which can detect touch pressure signals of multi-points.

A touch display device includes: a cover plate; a touch sensor unit configured to sense a touch signal applied to the cover plate; a display unit includes: a liquid crystal function layer including an upper polarizer, a filter, a liquid crystal layer, a substrate, and a lower polarizer, which are laminated in that order; a backlight module including an upper diffuser, an upper prismatic lens, a lower prismatic lens, a lower diffuser, a light guide plate and a reflector, which are laminated in that order; and a pressure sensor unit including an upper conductive electrode layer and a lower conductive electrode layer, which cooperatively form a capacitance sensor, wherein the pressure sensor unit is configured to sense a pressure signal applied to the cover plate, the upper conductive electrode layer is positioned between the liquid crystal function layer and the backlight module, the lower conductive electrode layer is positioned on a side of the reflector away from the light guide plate.

A touch display device includes: a cover plate; a touch sensor unit configured to sense touch signal applied to the cover plate; a display unit, includes: a liquid crystal function layer including a reflector; and a backlight module; and a pressure sensor unit including an upper conductive electrode layer and a lower conductive electrode layer, which cooperatively form a capacitance sensor, wherein the pressure sensor unit is configured to sense a pressure signal applied to the cover plate, the upper conductive electrode layer is positioned between the liquid crystal function layer and the backlight module, the lower conductive electrode layer is positioned within the reflector.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic view of a touch display device according to one embodiment.
FIG. 2 is a schematic view of a liquid crystal function layer of a touch display device according to another one embodiment.
FIG. 3 is a schematic view of a liquid crystal function layer of a touch display device according to yet another one embodiment.
FIG. 4 is a schematic view of a backlight module of a touch display device according to one embodiment.
FIG. 5 is a schematic view of a reflector of a backlight module of a touch display device according to one embodiment.
FIG. 6 is a schematic view of a reflector in a backlight module of a touch display device according to another one embodiment.
FIG. 7 is a schematic view of a reflector of a backlight module of a touch display device according to yet another one embodiment.
FIG. 8 is a schematic view of a touch display device according to another one embodiment.
FIG 9 is a schematic view of a touch display device according to yet another one embodiment.
FIG. 10 and FIG. 11 are schematic views of a partial of a pressure sensor unit of a touch display device according to one embodiment.
FIG 12 is a schematic view of a partial of a pressure sensor unit of a touch display device according to another one embodiment.

### DETAILED DESCRIPTION OF THE EMBODIMENTS

Embodiments of the invention are described more fully hereinafter with reference to the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art. Elements that are identified using the same or similar reference characters refer to the same or similar elements.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that, although the terms first, second, etc. may be used herein to describe various elements, these elements should not be limited by these terms. These terms are only used to distinguish one element from another. Thus, a first element could be termed a second element without departing from the teachings of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A touch display device provided herein can be a display terminal with touch interactive features, such as a mobile phone, a tablet PC (personal computer), etc.

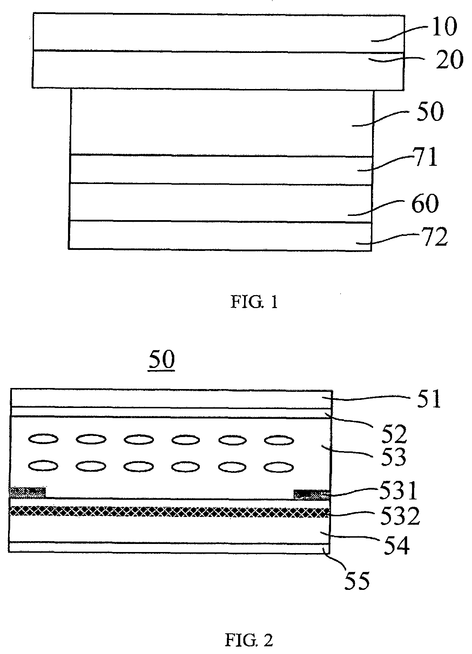

As shown in FIG. 1, a touch display device provided by one embodiment includes a cover plate 10, a touch sensor unit 20, a display unit, and a pressure sensor unit. The touch sensor unit 20 includes a touch drive electrode and a touch sensor electrode. The touch drive electrode and the touch sensor electrode can be distributed on one substrate, such as the so-called GF structure, GF2 structure in the field, or the touch drive electrode and the touch sensor electrode can be distributed on two different substrates, such as the so-called GFF structure in the field. In addition, in some other embodiments, the touch drive electrode and the touch sensor electrode can also be formed on the lower surface of the cover plate and enable the cover plate to further have a function of capacitance sensor, such structure is the so-called OGS structure in the field. In some other embodiments, one of the two touch electrodes can be formed on the surface of a substrate laminated on the cover plate, such is the so-called G1F structure. In alternative embodiments, the touch drive electrode and the touch sensor electrode of the touch sensor unit can be integrally formed in the liquid crystal layer (the structure of above touch sensor unit is the so-called in-cell structure in the field), or the touch drive electrode and the touch sensor electrode are positioned between the upper polarizer and the filter (the structure of above touch sensor unit is the so-called on-cell structure in the field). The touch drive electrode and the touch sensor electrode are employed to sense a touch signal applied to the cover plate. The touch signal includes a touch input signal such as touch, slide, or drag which is located on a two-dimensional direction and parallel to the cover plate, and the touch signal even includes a spatial input signal (such as a floating touch signal) which is perpendicular to the cover plate, or includes a touch input signal which is perpendicular to the side edge of the cover plate (such as the curved side edge of the curved screen).

The display unit includes a liquid crystal function layer 50 and a backlight module 60. The pressure sensor unit includes an upper conductive electrode layer 71 and a lower conductive electrode layer 72, which cooperatively form a plurality of capacitive sensors. The upper conductive electrode layer 71 is positioned between the liquid crystal function layer 50 and the backlight module 60. The lower conductive electrode layer 72 is positioned beneath the backlight module 60. It can be understood, in another one embodiment, the lower conductive electrode layer 72 is positioned within a reflector of the backlight module 60, for example, the lower conductive electrode layer 72 is embedded in the reflector. The pressure sensor unit is configured to sense a pressure signal applied to the cover plate. The upper conductive electrode layer 71 is positioned between the liquid crystal function layer 50 and the backlight module 60, for example, the upper conductive electrode layer 71 is positioned beneath a substrate or a lower polarizer, the lower conductive electrode layer 72 is positioned beneath the reflector. The lower conductive electrode layer 72 can be a reflective silvered layer or other conductive reflective layer.

The upper conductive electrode layer and the lower conductive electrode layer constitute a plurality of capacitive sensors which can be configured for a pressure detection. When the touch display device is subjected to a touch press, the conductive electrode layer can be deformed following the cover plate and the liquid crystal layer of the touch display device.

The upper conductive electrode layer is positioned beneath a substrate or a lower polarizer of the liquid crystal function layer. The upper conductive electrode layer is adjacent to/closely contact the rigid substrate or the rigid polarizer, thus when the upper conductive electrode layer is subjected to a touch press, the pressure can be directly transferred from the cover plate to the substrate or the polarizer of the liquid crystal function layer, subsequently causing the upper conductive electrode layer to be deformed greatly.

The lower conductive electrode layer is positioned beneath the reflector of the backlight module. Because the reflector is relative soft, the deformation transferred from the cover plate is a reduced bending deformation after passing through the soft upper diffuser, the lower diffuser, the light guide plate, the reflector, and the deformation can be ignored. Therefore, when a force is applied, a distance between the upper conductive electrode layer and the lower conductive electrode layer can be reduced differently according to different pressures. According to the capacitance computational formula C= ε S/4 n kd, the formed capacitance of the capacitance sensor is enlarged. Because different touch forces on the touch display device cause different positions of the touch display device to generate corresponding deformations, it further generates corresponding changes of d values. Therefore, a database of correlative relationship between the capacitance change of the plurality of capacitance sensors formed in above-mentioned pressure sensor unit of the touch display device and the force signal of the touch display device can be established. In practical application, the touch display device further includes a memory and a processor, the memory saves the information of the capacitance change of each capacitance sensor of the touch display device which is configured to detect the force, when different force touches are applied to different positions of the touch display device. The processor is configured to compare the information of capacitance change of each capacitance sensor detected and obtained by the touch display device to the pre-saved information of capacitance change, and thus the touch information of the touch display device is determined. The touch information includes the size of the touch force, and further includes the positions of the touch force.

As shown in FIG. 2, in the touch display device according to one embodiment, the liquid crystal function layer 50 of the display unit includes an upper polarizer 51, a filter 52, a liquid crystal layer 53, a substrate 54 and a lower polarizer 55. The liquid crystal layer 53 is further provided with a pixel electrode 531 and a common electrode 532, which are configured to drive, the pixel electrode 531 and the common electrode 532 are positioned on a same side of the liquid crystal layer 53, such structure is the so-called IPS (In-Plane Switch) structure in the field. The "upper", and "lower" is a relative speaking corresponding to a close extent to the user when the touch display device is used, the side close to the user is indicated as "upper", the side away from the user is indicated as "lower". For example, the lower surface of the cover plate indicates one side of the cover plate which is away from the user.

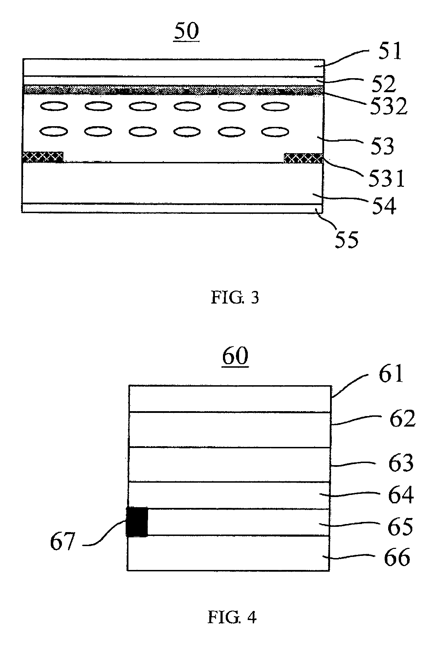

As shown in FIG. 3, in a touch display device provided by another one embodiment of the invention, the liquid crystal function layer 50 of the display unit has a structure similar to that in FIG. 1, the difference is that: the pixel electrode 531 and the common electrode 532 of the liquid crystal layer 53 are positioned on opposite sides of the liquid crystal layer 53, the structure is the so-called TN (Twisted Nematic) structure.

FIG. 4 shows a schematic view of a backlight module 60 of a touch display device according to one embodiment. The backlight module 60 includes an upper diffuser 61, an upper prismatic lens 62, a lower prismatic lens 63, a lower diffuser 64, a light guide plate 65, and a reflector 66. A light source 67 is positioned adjacent to the light guide plate 65. The light source 67 can be a light source, such as an LED. The liquid crystal function layer further includes a pixel electrode and a common electrode, which are configured to drive the liquid crystal layer.

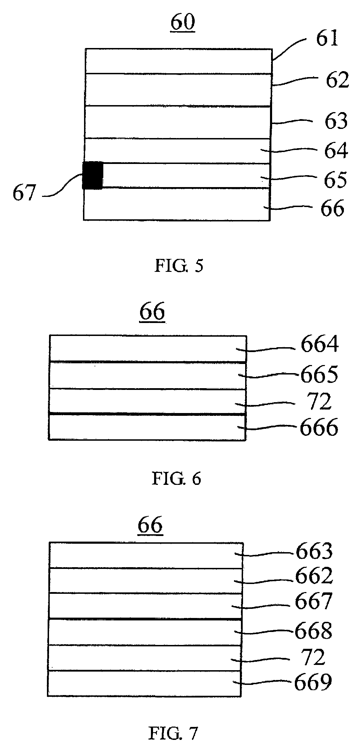

In another one embodiment, the backlight module 60 further includes a plastic frame positioned between the light guide plate 65 and the reflector 66. FIG. 5 is a schematic view of the reflector 66 of the backlight module 60 according to one embodiment. The reflector 66 is a single-sided coating reflective layer structure. The reflector 66 includes a protective layer 661, a conductive reflective layer 662 and a first substrate 663. The first substrate 663 is away from the plastic frame, the protective layer 661 is adjacent to the plastic frame. The conductive reflective layer 662 is a metallic layer, for example, the conductive reflective layer 662 can be a silvered layer, other metal alloy layer or other conductive reflective organic layer. The conductive reflective layer 662 is positioned beneath the protective layer 661. The protective layer 661 is made of transparent material. The conductive reflective layer 662 in the embodiment can serve as a lower conductive electrode layer beneath the pressure sensor unit, at the time of providing a reflective function for the backlight module, the conductive reflective layer 662 and the ground wire of the flexible PCB (printed circuited board) of the display unit form an electrical connection. Specifically, the protective layer 661 of the reflector 66 of the backlight module has a through hole to expose a portion of the conductive reflective layer 662, the plastic frame of the backlight module has a conductive part to establish an electrical connection between above-mentioned PCB and the exposed portion of the conductive reflective layer 662 of the reflector 66.

FIG. 6 is a schematic view of the reflector 66 according to another one embodiment. The reflector 66 has a resin stacked structure. The reflector 66 includes a resin layer 664, an adhesive layer 665, a lower conductive electrode layer 72 and a substrate 666. In the reflector 66, the resin layer 664 has a reflective function for the backlight module 60. The lower conductive electrode layer 72 and the substrate 666 are made of ITO film materials, graphene membrane material, carbon nano-tube material and metal mesh material, and then are adhered to the resin layer 664 of the reflector 66 via the adhesive layer 665. In another embodiment, the lower conductive electrode layer 72 can also be directly coated on the lower surface of the resin layer 664, thus omitting the adhesive layer 665. In one embodiment, the lower conductive electrode layer 72 can be provided with an exposed portion by a manner similar to that in the embodiment of FIG. 5, and forms an electrical connection with the ground wire of the flexible PCB of the display unit via the conductive part of the plastic frame.

FIG. 7 is a schematic view of a reflector 66 according to yet another one embodiment. The reflector 66 has a double-sided coating structure. The reflector 66 includes a first substrate 663, a reflective layer 662, a surface coating layer 667, an adhesive layer 668, a lower conductive electrode layer 72 and a second substrate 669. The lower conductive electrode 72 is a conductive reflective layer on the second substrate 669, and can be a metallic layer such as silver coating, aluminum coating and so on. The lower conductive electrode layer 72 provides a reflective function for the backlight module, and at the same time, it serves an electrode layer of the pressure sensor unit, and forms an electrical connection with the ground wire of the flexible PCB of the backlight module 60.

In one embodiment, the upper conductive electrode layer 71 of the pressure sensor unit can be positioned between the liquid crystal function layer 50 and the backlight module 60. Specifically, it can be directly positioned on the lower surface of the substrate 54 of the liquid crystal function layer 50, and it also can be directly positioned on the upper surface or the lower surface of the lower polarizer 55. The lower conductive electrode layer 72 of the pressure sensor unit is positioned beneath the reflector 66 of the backlight module 60. In addition, in the pressure sensor unit, the upper conductive electrode layer 71 includes a transparent and a plurality of capacitance sensors fabricated on the transparent substrate. The transparent substrate is a glass, PET(Polyethylene terephthalate), PC(Polycarbonate) and so on, the pressure can be detected by the plurality of capacitance sensors, and the upper conductive electrode layer 71 can be sandwiched between the liquid crystal function layer 50 and the backlight module 60. The transparent substrate and the plurality of capacitance sensors can also be made by the carbon nano-tube material, the graphene membrane material, and the metal mesh material.

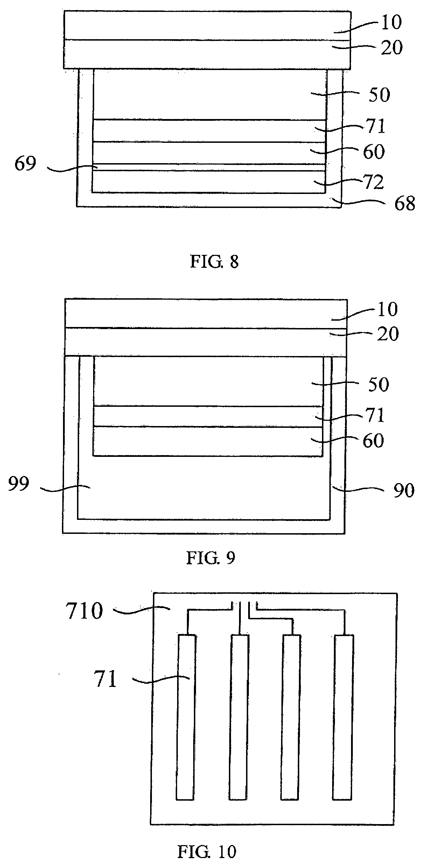

As shown in FIG. 8, the touch display device provided by yet another one embodiment according to the invention includes: a cover plate 10, a touch sensor unit 20, a display unit and a pressure sensor unit. The display unit includes above liquid crystal function layer 50 and above backlight module 60. The pressure sensor unit includes an upper conductive electrode layer 71 and a lower conductive electrode layer 72. The upper conductive electrode layer 71 is positioned between the liquid crystal function layer 50 and the backlight module 60. The touch display device further includes a protective metallic sheet 68 positioned beneath the reflector 66. The periphery of the protective metallic sheet 68 supports the cover plate 10. In one embodiment, the touch sensor unit 20 is directly positioned on the lower surface of the cover plate 10, therefore, the periphery of the protective metallic sheet 68 can also support the cover plate 10.

The lower conductive electrode layer 72 is positioned on the upper surface of the protective metallic sheet 68. An interstice 69 is provided between the reflector 66 and the protective metallic sheet 68. In some embodiments, the interstice 69 can be filled by soft elastic material, such as foam, and porous material.

In some other embodiments, the protective metallic sheet 68 can also serve as a lower conductive electrode layer 72, i.e. the protective metallic sheet 68 and the upper conductive electrode layer 71 constitute a plurality of capacitance sensors which are configured to sense magnitudes and positions of touch pressures.

FIG. 9 illustrates a touch display device provided by yet another one embodiment, which includes a cover plate 10, a touch sensor unit 20, a display unit and a pressure sensor unit. The display unit includes above liquid crystal function layer 50 and above backlight module 60. The pressure sensor unit includes an upper conductive electrode layer 71. The upper conductive electrode layer 71 is positioned between the crystal function layer 50 and the backlight module 60. The touch display device further includes a conductive middle frame 90. The conductive middle frame 90 is positioned beneath the backlight module 60 and is configured to support the cover plate 10 and the touch sensor unit 20. An interstice 99 is provided between the conductive middle frame 90 and the backlight module 60. The conductive middle frame 90 is made of conductive material, or a partial structure of the conductive middle frame 90 is made of conductive material. The conductive middle frame 90 serves as the lower conductive electrode layer 72 beneath the pressure sensor unit, and forms a plurality of capacitance sensors together with the upper conductive electrode layer 71. In the embodiment, the conductive middle frame 90 serves as the lower conductive electrode layer, is a whole piece of electrode. The conductive middle frame 90 can adopt a same grounding treatment together with the touch display device.

In above embodiments, in the pressure sensor unit, the upper conductive electrode layer 71 includes a transparent substrate and a plurality of capacitance sensors fabricated on the transparent substrate. The transparent substrate is a glass, PET, PC and so on, the pressure can be detected by the capacitance sensor, and the upper conductive electrode layer 71 is then sandwiched between the liquid crystal function layer 50 and the backlight module 60. Furthermore, the upper conductive electrode layer 71 can be directly fabricated on the lower surface of the substrate 54 of the liquid crystal function layer 50, or on the surface of the lower polarizer.

FIG. 10 is a schematic view of an upper conductive electrode layer 71 of the pressure sensor unit. The upper conductive electrode layer 71 includes a plurality of elongated conductive electrodes formed on a transparent substrate 710. The transparent substrate 710 can be constituted by transparent organic thin-film, such as PET, PC. The electrode pattern of the upper conductive electrode layer 71 can be obtained by manners such as laser engraving or etching ITO thin-film, silk-screening conductive slurry on the PET, laser engraving the carbon nano-tube thin-film or the grapheme thin-film. The transparent substrate 710 is formed with the upper conductive electrode layer 71, and is then sandwiched between the liquid crystal function layer 50 and the backlight module 60. It can be understood, the upper conductive electrode layer 71 can also be directly fabricated on the lower surface of the substrate 54 of the liquid crystal function layer 50 which is constituted by transparent material such as glass, i.e. the conductive layer can be fabricated on the substrate 54 first, and the electrode pattern of the specific capacitance sensor is then formed.

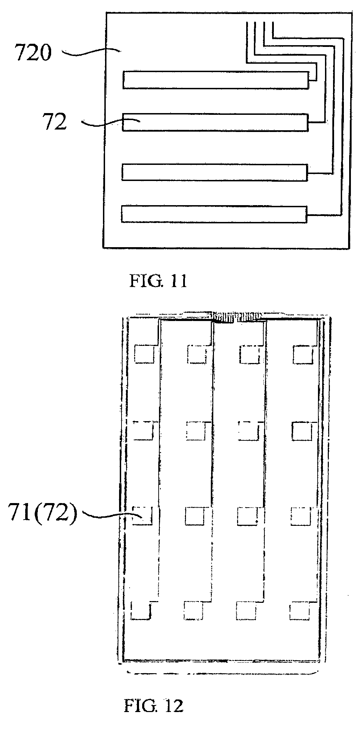

FIG. 11 is a schematic view of a lower conductive electrode layer 72 of the pressure sensor unit. The upper conductive electrode layer 72 includes a plurality of elongated conductive electrodes and a flexible substrate 720. The plurality of elongated conductive electrodes is formed on a flexible substrate 720. The flexible substrate 720 can be constituted by transparent organic thin-film, such as PET, PC, and can also be constituted by non-transparent flexible material such as a flexible PCB. The electrode pattern of the lower conductive electrode layer 72 can be obtained by manners such as etching ITO thin-film, silk-screening conductive slurry on the PET, laser engraving the carbon nano-tube thin-film or the grapheme thin-film.

The electrodes of the upper conductive electrode layer 71 and the electrodes of the lower conductive electrode layer 72 are perpendicularly arranged, and form a cross region on a horizontal two-dimensional plane, and thereby forming a plurality of capacitance sensors which can be configured to detect force. The detection of capacitance of the formed capacitance sensor is same as the present existing testing. method of capacitive touch control screen. The plurality of elongated electrodes of above upper conductive electrode layer and above lower conductive electrode layer can be in other shapes, such as in a chain shape connecting with a plurality of electrode blocks.

FIG. 12 is a schematic view of another electrode in the upper conductive electrode layer 71 and the lower conductive electrode layer 72, the conductive electrodes in the conductive electrode layer are arranged in an array each in a block shape. The conductive electrode layer can be any conductive electrode layer in the pressure sensor unit of above embodiment. When the conductive electrode layer shown in FIG. 12 is an upper conductive electrode layer, the lower conductive electrode layer can be a whole surface type electrode, such as a conductive middle frame. It can be understood that the lower conductive electrode layer can also have electrode patterns same as that of the upper electrode layer. Further, when the upper conductive electrode layer 71 has a structure same as the conductive electrode patterns shown in FIG. 12, the lower conductive electrode layer can be a whole surface type electrode such as silvered coating reflective layer or other conductive reflective layer contained in the reflector of the backlight module. It can be understood that, when the conductive coating layer does not provide a reflective function, the lower conductive coating layer can have conductive electrode patterns structure same as that of the upper conductive coating layer. In addition, the upper conductive electrode layer includes a plurality of electrode blocks, each has a shape of strip, cube, prism, circular, or other irregular block or strip, at the same time, the shape of the electrode block includes the shape of above electrode which is subjected to an interior cut-out treatment. The plurality of electrode blocks and the lower conductive electrode layer form a plurality of capacitance sensors which can detect pressure signals applied to the cover plate.

In addition, above conductive electrode layer which constitutes the pressure sensor unit can also be constituted by metal-mesh, i.e. the required electrode patterns are obtained by forming conductive metal-mesh on the substrate.

In the embodiment, the pressure signals of the touch operation are obtained by monitoring the capacitance, the capacitance sensor which is configured to sensor the pressure signals can detect touch pressure signals of multi-points at the same time, and has an advantage of high detect accuracy. The capacitance sensor is combined to and positioned between the backlight module of the display unit and the liquid function layer, and the thickness of the touch display device is not increased noticeably.

In a conclusion, although the invention is illustrated and described herein with reference to specific embodiments, the invention is not intended to be limited to the details shown. Rather, various modifications may be made in the details within the scope and range of equivalents of the claims and without departing from the invention. The scope of the invention is set forth in the following claims along with their full scope of equivalents.

## Claims

1. A touch display device, comprising:
a cover plate (10);
a touch sensor unit (20) configured to sense touch signal applied to the cover plate (10);
a display unit comprising:
a liquid crystal function layer (50) comprising an upper polarizer (51), a filter (52), a liquid crystal layer (53), a substrate, and a lower polarizer (55), which are laminated in that order;
a backlight module (60) and
a pressure sensor unit comprising an upper conductive electrode layer (71) and a lower conductive electrode layer (72), which cooperatively forming a capacitance sensor configured to sense a pressure signal applied to the cover plate (10), wherein the upper conductive electrode layer (71) is positioned between the liquid crystal function layer (50) and the backlight module (60), the lower conductive electrode layer (72) is positioned on a side of the reflector (66) away from the light guide plate (65).

2. The touch display according to Claim 1 whereby the backlight module (60) comprising an upper diffuser (61), an upper prismatic lens (62), a lower prismatic lens (63), a lower diffuser (64), a light guide plate (65) and a reflector (66), which are laminated in that order and wherein the lower conductive electrode layer (72) is positioned on a side of the reflector (66) away from the light guide plate (65).

3. The touch display device according to claim 1 or 2, wherein the upper conductive electrode layer (71) is fabricated on a lower surface of the substrate of the liquid crystal function layer (50) or fabricated on an upper surface of the lower polarizer (55).

4. The touch display device according to any of the claims 1 to 3, wherein the upper conductive electrode layer (71) is fabricated on a transparent substrate, the upper conductive electrode layer (71) and the transparent substrate are sandwiched between the liquid crystal function layer (50) and the backlight module (60).

5. The touch display device according to any of the claims 1 to 4, further comprising a protective metallic sheet positioned beneath the reflector (66), wherein a periphery of the protective metallic sheet supports the cover plate (10).

6. The touch display device according to any of the claims 1 to 5, wherein the lower conductive electrode layer (72) is positioned on an upper surface of the protective metallic sheet, and an interstice is provided between the lower conductive electrode layer (72) and the reflector (66), the interstice is filled with elastic material.

7. The touch display device according to any of the claims 1 to 6, wherein the lower conductive electrode layer (72) is a conductive middle frame positioned beneath the backlight module (60) and is configured to support the cover plate (10) and the touch sensor unit (20).

8. A touch display device according to any of the claims 1 to 7, whereby the liquid crystal function layer (50) comprises a reflector; and the lower conductive electrode layer (72) is positioned within the reflector.

9. The touch display device according to any of the claims 1 to 8, wherein the liquid crystal function layer (50) comprises an upper polarizer (51), a filter (52), a liquid crystal layer (53), a substrate, and a lower polarizer (55), which are laminated in that order, the backlight module (60) comprises an upper diffuser (61), an upper prismatic lens (62), a lower prismatic lens (63), a lower diffuser (64), a light guide plate (65), a plastic frame and the reflector, which are laminated in that order.

10. The touch display device according to any of the claims 1 to 9, wherein the upper conductive electrode layer (71) is fabricated on a lower surface of the substrate of the liquid crystal function layer (50), or fabricated on an upper surface of the lower polarizer (55).

11. The touch display device according to any of the claims 1 to 10, wherein the upper conductive electrode layer (71) comprises a transparent substrate and a plurality of electrode blocks fabricated on the transparent substrate, the upper conductive electrode layer (71) is sandwiched between the liquid crystal function layer (50) and the backlight module (60).

12. The touch display device according to any of the claims 1 to 11, wherein the reflector comprises a substrate and a protective layer laminated upon the substrate, the lower conductive electrode layer (72) is a conductive reflective layer positioned between the protective layer and the substrate.

13. The touch display device according to claim 9, wherein the reflector comprises a substrate and a resin layer laminated upon the substrate configured to reflect a backlight, the lower conductive electrode layer (72) is fabricated on a lower surface of the resin layer.

14. The touch display device according to any of the claims 1 to 13, wherein the reflector comprises a first substrate, a reflective layer, a surface coating layer, an adhesive layer, and a second substrate, the lower conductive electrode layer (72) is a conductive reflective layer positioned between the adhesive layer and the second substrate.

15. The touch display device according to any of the claims 1 to 14, wherein the display unit comprises a flexible PCB (printed circuit board), the plastic frame is provided with a conductive part, the lower conductive electrode layer (72) is provided with an exposed portion, the exposed portion is electrically coupled to the flexible PCB via the conductive part.
